# EUROPÄISCHE PATENTSCHRIFT

(11) **EP 1 966 485 B1**
(45) Veröffentlichungstag und Bekanntmachung des Hinweises auf die Patenterteilung: **14.04.2010**
(21) Anmeldenummer: 06829893.4
(22) Anmeldetag: 28.12.2006
(51) Int. Cl.: F03B 17/06

(54) **VORRICHTUNG UND ANLAGE ZUR ERZEUGUNG VON REGENERATIVER UND ERNEUERBARER ENERGIE AUS WASSER**
DEVICE AND SYSTEM FOR PRODUCING REGENERATIVE AND RENEWABLE HYDRAULIC ENERGY
DISPOSITIF ET SYSTEME DE PRODUCTION D'ENERGIE HYDRAULIQUE REGENERATIVE ET RENOUVELABLE

(30) Priorität: 29.12.2005 DE 102005062908
(43) Veröffentlichungstag der Anmeldung: 10.09.2008
(73) Patentinhaber: Hamann, Georg, 83259 Schleching (DE)
(72) Erfinder: Hamann, Georg, 83259 Schleching (DE)
(74) Vertreter: Reinhardt, Markus
(86) Internationale Anmeldenummer: PCT/EP2006/012584
(87) Internationale Veröffentlichungsnummer: WO 2007/079973

(56) Entgegenhaltungen:
- WO-A-95/18302
- JP-A- 59 231 177
- US-A- 1 780 584
- US-A- 1 903 545
- US-A- 4 520 273
- US-A1- 2004 096 310

## Beschreibung

Die vorliegende Erfindung betrifft eine Vorrichtung zur Erzeugung von regenerativer und erneuerbarer Energie aus Wasser, nach dem Oberbegriff des Anspruchs 1.

Weiterhin betrifft die vorliegende Erfindung eine Anlage zur Erzeugung von regenerativer und erneuerbarer Energie aus Wasser, die eine Mehrzahl von derartigen Vorrichtungen aufweist.

Seit mehr als 100 Jahren wird Wasser zur Energiegewinnung genutzt. Bestehende Wasserkraftwerke werden je nach Wassermenge und Gefälle ausgelegt. Abhängig von diesen Größen kommen Pelton-, Francis- oder Kaplan-Turbinen bzw. Wasserräder zum Einsatz. Weiterhin sind auch Rohrturbinen sowie sog. Wasserschnecken, nach dem Prinzip der "Archimedes-Schnecke" bekannt.

Die seit Jahren bzw. sogar Jahrzehnten bekannten Bauformen derartiger Wasserräder und -turbinen haben bisher zu keinen Weiterentwicklungen Anlass gegeben.

Der Einsatz der oben aufgeführten Turbinentypen hängt einerseits von der Wassermenge und andererseits vom Gefälle bzw. dem Staudruck ab. So werden beispielsweise Peltonturbinen bei großem Gefälle und Druck bei gleichzeitiger geringer Wassermenge eingesetzt, wohingegen Kaplanturbinen bei kleinem Gefälle und mittleren Wassermengen eingesetzt werden. Eine Nutzung bei kleinem Gefälle und kleinen Wassermengen ist mit den bekannten Turbinentypen jedoch nicht möglich.

Zusätzlich bilden unterschiedliche Wassermengen bzw. sich ändernde Wassermengen ebenfalls Probleme bei diesen Turbinentypen, die auf einen relativ begrenzten Wassermengenbereich ausgelegt sind. Wenn die Wassermenge zu hoch oder zu niedrig ist, ist der Einsatz der jeweiligen Turbine nicht mehr möglich.

Die teilweise schon sehr lange bestehenden Turbinentypen sind in ihrem Wirkungsgrad ausgereizt und nicht mehr steigerbar. Für entsprechende Weiterentwicklungen besteht daher kein Anlass.

Nicht zuletzt wegen der erheblich höheren Preise für fossile Brennstoffe und deren begrenzte Verfügbarkeit ist in den letzten Jahren der Bedarf an Energiegewinnung aus erneuerbarer Energie stark gewachsen, wobei deren Nutzung den Vorteil hat, dass der sog. Treibhauseffekt dadurch nicht erhöht wird.

Der Nachteil bekannter Wasserkraftwerksysteme ist deren enormer Eingriff in die Natur mit extremen Baumaßnahmen und Veränderungen, wie das vor kurzem fertiggestellte neue Wasserkraftwerk in China zeigt.

Aus der US-PS 1,903,545, die als nächstliegenden Stand der Technik angesehen wird, ist eine Vorrichtung zur Umwandlung kinetischer Energie aus einer Wasserströmung bekannt. Die dort gezeigte Vorrichtung hat eine Antriebswelle, die eine Mehrzahl von Schaufeln aufweist, die sich zumindest teilweise in vorbeiströmendes Wasser erstrecken und durch dieses Wasser in Drehung versetzbar sind, wobei die Schaufeln entlang der Antriebswelle und zueinander versetzt angeordnet sind. Am Ende der Antriebswelle wird die kinetische Energie entnommen. Die Schaufeln sind dabei starr und im fixen Winkel zur Antriebswelle dort befestigt. Der erreichbare Wirkungsgrad dieser Vorrichtung bei der Umwandlung der kinetischen Energie aus dem vorbeiströmenden Wasser ist nur gering.

Der vorliegenden Erfindung liegt deshalb die Aufgabe zugrunde, eine besonders umweltverträgliche, einfach aufgebaute und einfach einzusetzende Vorrichtung zur Erzeugung von regenerativer und erneuerbarer Energie aus Wasser zu schaffen, die zudem einen besonders hohen Wirkungsgrad auch bei unterschiedlicher Wasserverfügbarkeit aufweist.

Weiterhin soll auch eine entsprechend modulartig aufbaubare Anlage aus derartigen Vorrichtungen geschaffen werden.

Die erfindungsgemäße Vorrichtung zur Erzeugung von regenerativer und erneuerbarer Energie aus Wasser umfasst wenigstens einen Generator zur Erzeugung elektrischer Energie und eine mit dem Generator verbundene Antriebswelle, die eine Mehrzahl von Schaufeln aufweist, welche sich zumindest teilweise in vorbeiströmendes Wasser erstrecken und durch dieses Wasser in Drehung versetzbar sind. Dadurch, dass die Schaufeln entlang der Antriebswelle und zueinander versetzt angeordnet sind, wird eine optimale Ausnutzung des durch das vorbeiströmende Wasser vorhandenen Druckes ausgenutzt und ergibt sich eine überraschend hohe Drehzahl der Antriebswelle sowie ein hohes Drehmoment.

Insbesondere ist diese Drehzahl und das Drehmoment bei der erfindungsgemäßen Vorrichtung konstanter als bei herkömmlicher Turbinentypen bzw. -anlagen.

Mit der erfindungsgemäßen Vorrichtung zur Erzeugung von regenerativer und erneuerbarer Energie aus Wasser wird eine Vielzahl von Vorteilen erreicht, die unter anderem sind:
- einfache und leichte Einsetzbarkeit in fließenden Gewässern, ohne anfallenden Baumaßnahmen;
- Ermöglichen einer regionalen Grundversorgung durch entsprechenden ortsnahen Einsatz beim Stromverbraucher;
- universelle Anpassung der Vorrichtung an die vorhandenen Strömungsbedingungen und damit Sicherstellung eines optimalen Wirkungsgrades der erfindungsgemäßen Vorrichtung;
- umweltfreundliche Energieerzeugung;
- optimale Größenanpassung der Vorrichtung an die entsprechende zu erzeugende Energiemenge, beispielsweise Montagesatz in Koffergröße für den Einsatz auf Almen und dergleichen;
- Anpassungsmöglichkeit an jegliche Art von fließenden Gewässern und unterschiedlichen Strömungsbedingungen;
- absolut emissionsfreie Energieerzeugung.

Vorteilhafterweise sind die Schaufeln repellerartig ausgebildet. Repeller sind gleich aufgebaut wie Propeller, gemäß Definition dienen jedoch Propeller zum Antrieb (beispielsweise Flugzeug oder Schiff), wohingegen Repeller vom umströmenden Medium angetrieben werden. Unter dem Begriff repellerartig sind Repeller zu verstehen die eine, zwei oder auch mehrere Schaufeln aufweisen können.

Vorteilhafterweise ist erfindungsgemäß die Winkelstellung der Schaufeln untereinander einstellbar. Dies führt zu einer Optimierung der Ausnutzung der vorbeiströmenden Wassermenge, wobei die Winkelstellung der Schaufeln untereinander entlang der Antriebswelle unterschiedlich sein kann.

Weiterhin ist vorteilhaft, dass der Abstand der Schaufeln in Längsrichtung der Antriebswelle einstellbar ist und gegebenenfalls unterschiedlich bzw. nicht konstant ist.

Weiterhin ist vorteilhaft, dass die Winkelstellung der Schaufelfläche bezüglich der Antriebswelle einstellbar ist. Damit ist die Stellung der Schaufelfläche an den, an ihr angreifenden Wasserdruck einstellbar und kann über die Länge der Antriebswelle unterschiedlich sein. Dabei kann die Einstellung mittels Computersteuerung und/oder mechanisch, elektromotorisch, pneumatisch oder hydraulisch erfolgen.

Insgesamt ist bei der erfindungsgemäßen Vorrichtung besonders vorteilhaft, dass sie an das vorherrschende "Gewässerleistungsdiagramm" optimal anpassbar ist, wobei die Einstellung der Schaufeln vorteilhafterweise auch mit einer Computersteuerung erfolgen kann. In das "Gewässerleistungsdiagramm" können folgende Parameter einfließen: die Wassermenge (in m³/sec), das Gefälle, die Strömungsenergie und die Staudruckdynamik.

Über die Länge der Antriebswelle wird das Gewässerleistungsdiagramm gegebenenfalls über geeignete Sensoren erfasst und die Stellung der Schaufeln untereinander diesem sich gegebenenfalls verändernden Gewässerdiagramm angepasst, wodurch stets der optimale Wirkungsgrad der erfindungsgemäßen Vorrichtung erzielbar ist.

Dadurch, dass die Schaufeln auf der Antriebswelle lösbar montiert sind, wird ein schnelles Auswechseln einzelner Schaufeln möglich, dessen Grund beispielsweise Abnutzung oder Beschädigung sein kann.

In einer ersten bevorzugten Ausführungsform ist die Antriebswelle unmittelbar mit dem Generator verbunden und treibt diesen direkt an. Alternativ kann die Antriebswelle mit dem Generator auch über ein entsprechendes Getriebe verbunden sein.

Dadurch, dass die Antriebswelle in einem Rahmen gelagert ist, beispielsweise in Rechteckform, wird der Vorteil eines einfachen, kompakten, leicht transportfähigen und leicht anbringbaren Aufbaus erreicht. An dem Rahmen kann vorteilhafterweise auch der Generator angebracht sein.

Weiterhin ergibt sich der Vorteil, dass der Rahmen in einem halb geschlossenen oder geschlossenen Gerinne angeordnet ist, durch das das Wasser kontrolliert durchgeleitet wird.

Dadurch, dass die Vorrichtung horizontal, schräg oder auch vertikal angeordnet werden kann, wird der Vorteil ihrer universellen Einsetzbarkeit verwirklicht. Sie kann somit entweder in normal fließendes Gewässer, wie beispielsweise dahinfließende Flüsse oder Bäche eingesetzt werden, in schräg verlaufende Gerinne oder sogar in vertikal fallende Wasserfälle eingesetzt werden.

Mit Vorteil kann die erfindungsgemäße Vorrichtung, vorzugsweise mittig, zwischen zwei Auftriebs- oder Schiffskörper angeordnet werden, die vorzugsweise eine Verankerung aufweisen. Damit wird der große Vorteil erreicht, dass die Vorrichtung auf dem Wasser schwimmt, was ermöglicht, die erfindungsgemäße Vorrichtung einfach und ohne weitere Baumaßnahme auf ein fließendes Gewässer zu setzen und durch den Wasserfluss Strom zu erzeugen. Zusätzlich wird der große Vorteil erreicht, dass der Einsatz der Vorrichtung nicht von der Wasserhöhe abhängt und, da sie der Wasseroberfläche folgt, auch der Einsatz während Hochwasser ermöglicht wird. Durch eine geeignete Verankerung wird auch ermöglicht, dass sich die Vorrichtung der sich unter Umständen verändernden Strömungsrichtung des Wassers ohne zusätzliche Maßnahmen anpasst.

Unterstützt wird dies noch dadurch, dass die Vorrichtung vorteilhafterweise ein selbstausrichtendes Ruderwerk aufweist.

Weiterhin ist vorteilhaft, dass die Vorrichtung Leit- oder Strahlrohre umfasst, die den Wasserfluss auf die äußeren Enden der Schaufeln leiten, wodurch eine optimierte Anströmung der Schaufeln ermöglicht wird.

Weiterhin ist vorteilhaft, dass die die Schaufeln lagernde Antriebswelle höhenverstellbar gelagert ist. Dadurch ist die Eintauchtiefe der Schaufeln in das vorbeiströmende Wasser einstellbar, wobei gegebenenfalls sich die Eintauchtiefe der Schaufeln entlang der Antriebswelle ändert. Die Höhenverstellbarkeit kann vorteilhafterweise durch Verschwenken der Antriebswelle beispielsweise mittels einseitig gelagerter Schwenkarme erfolgen.

Wie oben ausgeführt, ergeben sich bei der erfindungsgemäßen Energieerzeugungsvorrichtung erhebliche Drehgeschwindigkeiten, die zu Vibrationen führen können. Vorteilhafterweise ist die Antriebswelle nicht nur an ihren beiden Enden sondern auch an wenigstens einer weiteren Stelle, beispielsweise an zwei bis fünf Stellen zwischen den Enden gelagert, was einerseits zu einer größeren Steifigkeit der gesamten Vorrichtung und andererseits zu einem im Wesentlichen vibrationsarmen oder vibrationsfreien Drehen der Antriebswelle führt.

Vorteilhafterweise sind zur Lagerung der Antriebswelle wartungsfreie, ölfreie Gleit- oder Kugellager auch aus Kunststoff oder Keramik vorgesehen, die einerseits eine lange Lebensdauer aufweisen und andererseits keine Gefahr der Verschmutzung des vorbeifließenden Wassers darstellen.

Weiterhin ist vorteilhaft, dass die Antriebswelle als eine Vielzahnwelle und die Halterung der jeweiligen Schaufeln als Vielzähnhalterung ausgebildet ist, wodurch ein einfaches, wirksames und leicht einstellbares Montagesystem der Schaufeln an der Antriebswelle erreicht wird bei gleichzeitig stabiler Lagerung der Schaufeln an der Antriebswelle zur störungsfreien Kraftübertragung auf die Antriebswelle.

In fließenden Gewässern werden nicht nur Fremdstoffe, wie Holz oder Blätter mitbewegt, sondern es befinden sich auch Fische darin, sodass vorteilhafterweise an der Frontseite der Vorrichtung ein Grobrechen, vorzugsweise in Spitzpflugform und vorzugsweise mit oben schwimmenden runden Abweisern vorgesehen ist, wodurch effektiv ein Eindringen von Fremdkörpern in die erfindungsgemäße Vorrichtung vermieden wird. Deren Schutz kann dadurch noch erhöht werden, dass weiterhin ein Gitterkäfig vorgesehen ist, der die Vorrichtung umgibt.

Eine besonders vorteilhafte Ausgestaltung der Schaufeln ergibt sich dadurch, dass jeweils zwei um 180° versetzte Schaufeln ein gemeinsames Hohlprofil bzw. eine gemeinsame Schaufel bilden, das bzw. die einen Hohlraum aufweist, in dem eine Flüssigkeit vorhanden ist. Die Flüssigkeit füllt dabei den Hohlraum nicht vollständig, vorzugsweise im Wesentlichen zur Hälfte aus. Der Hohlraum ist in den beiden Schaufelhälften symmetrisch ausgebildet. Wenn sich der Hohlraum in der Waagrechten befindet, ist in beiden Hohlraumhälften im Wesentlichen die gleiche Menge Flüssigkeit. Drehen sich nun die Schaufeln weiter, so beschleunigt die Flüssigkeit durch die Schwerkraft schlagartig und versetzt die Schaufeln in weitere Drehung. Bei einer Vielzahl von Hohlprofilschaufeln ergibt sich sodann eine konstante Drehzahl und ein im Wesentlichen konstantes Drehmoment. Vorteilhafterweise ist die Flüssigkeit Wasser, es kann jedoch auch jegliche geeignete Flüssigkeit verwendet werden.

Diese Ausgestaltung eignet sich insbesondere bei nur wenig vorhandenem fließenden Wasser, weil nur eine geringe Antriebsenergie von außen notwendig ist, die Schaufeln in Drehung zu versetzen.

Die vorliegende Erfindung hat auch eine Anlage zur Erzeugung von regenerativer und erneuerbarer Energie aus Wasser zum Gegenstand, wobei sie sich dadurch auszeichnet, dass sie eine Mehrzahl von hintereinander und/oder nebeneinander und/oder übereinander angeordneter Vorrichtungen nach einem der Ansprüche 1 bis 20 aufweist.

Eine derartige Anlage kann somit modulmäßig aufgebaut werden und ist universell an die Einsatzbedingungen, wie beispielsweise Flussbreite, Einsatzlänge, Wassertiefe, etc. anpassbar.

In einer speziellen Ausführungsform können die Antriebswellen der Vorrichtungen auch kardanisch miteinander verbunden sein, und damit gemeinsam einen Generator antreiben.

Weitere Einzelheiten, Merkmale und Vorteile ergeben sich aus der nachfolgenden Beschreibung unter Bezugnahme auf die beigefügten Zeichnungen. Darin zeigt:
- Figur 1: eine erste Ausführungsform der erfindungsgemäßen Vorrichtung zur Erzeugung von regenerativer und erneuerbarer Energie in perspektivischer Ansicht von vorne, oben links;
- Figur 2: eine Seitenansicht der ersten Ausführungsform der erfindungsgemäßen Vorrichtung von Figur 1;
- Figur 3: eine Frontansicht einer zweiten Ausführungsform der erfindungsgemäßen Vorrichtung;
- Figur 4: eine schematische Seitenansicht einer rohrförmig ausgebildeten erfindungsgemäßen Vorrichtung;
- Figur 5: eine schematische Teilansicht der Antriebswelle mit Schaufeln der erfindungsgemäßen Vorrichtung;
- Figur 6: in perspektivischer Teilansicht eine konstruktive Ausgestaltung der Antriebswelle mit schaufeln und deren Lagerung;
- Figur 7: in Explosionsdarstellung einen Lagerabschnitt von zwei Schaufeln auf der Antriebswelle;
- Figur 8: eine prinzipielle Frontansicht einer schwimmenden Ausführungsform der erfindungsgemäßen Vorrichtung;
- Figur 9: die Anbringung einer Ausführungsform der erfindungsgemäßen Vorrichtung an einer Uferböschung;
- Figur 10: eine schwimmende Ausführungsform der erfindungsgemäßen Vorrichtung mit Rechen in Spritzpflugform;
- Figur 11: eine weitere Ausführungsform der erfinderischen Vorrichtung mit einer mehrfach gelagerten Antriebswelle;
- Figur 12: in Frontansicht eine weitere Ausführungsform der erfindungsgemäßen Vorrichtung;
- Figur 13: in Frontansicht eine Ausführungsform der erfindungsgemäßen Vorrichtung mit Riemenantrieb;
- Figur 14: in perspektivischer Ansicht eine rohrförmige Ausführungsform der erfindungsgemäßen Vorrichtung
- Figur 15: in perspektivischer Ansicht eine weitere Ausführungsform der Antriebswelle der erfindungsgemäßen Vorrichtung mit Schaufeln mit Hohlprofilen;
- Figur 16: die Frontansicht der Ausführungsform gemäß Fig. 15;
- Figur 17: die Seitenansicht der Ausführungsform von Fig. 15;
- Figuren 18a bis 18c: eine vergrößerte schematische Ansicht der Ausführungsform der Schaufeln mit Hohlprofil; und
- Figuren 19a bis 19c: eine Ausführungsvariante der Schaufeln von Figuren 18a bis 18c.

Bei der nachfolgenden Beschreibung sind in den Figuren dargestellte gleiche Elemente mit den gleichen Bezugsziffern bezeichnet.

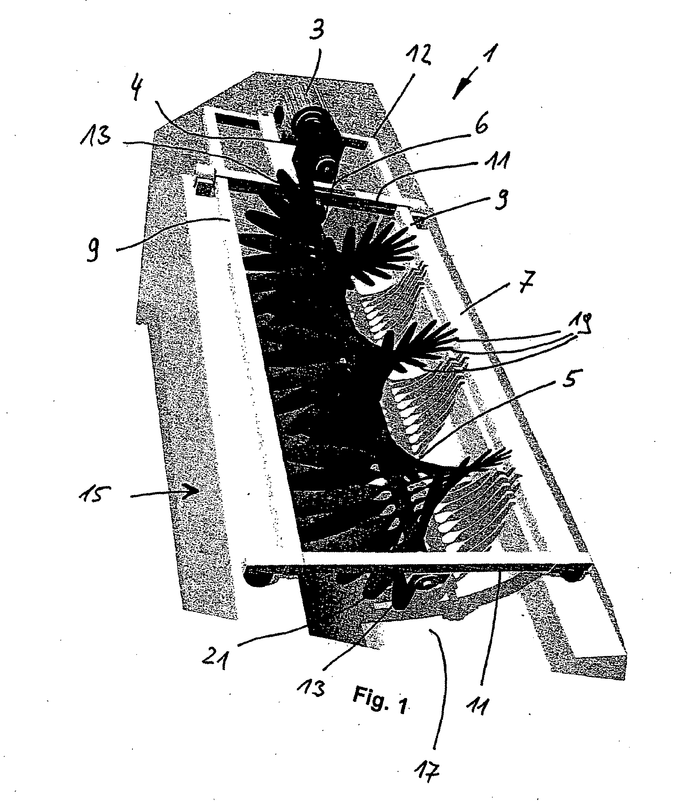

In Figur 1 ist eine erste Ausführungsform einer erfindungsgemäßen Vorrichtung 1 zur Erzeugung von regenerativer und erneuerbarer Energie aus Wasser in einer Prinzipdarstellung dargestellt. Gemäß Figur 1 weist die erfindungsgemäße Vorrichtung 1 einen Generator 3 auf, der im Ausführungsbeispiel über ein Getriebe 4 und einem Riemen 6 mit einer Antriebswelle 5 verbunden ist.

Die Antriebswelle 5 ist mittig in einem Rahmen 7 angeordnet, der rechteckförmig ausgebildet ist, und zwei Längsträger 9 und zwei Querträger 11 aufweist. Der Rahmen 7 weist weiterhin einen Zusatzabschnitt 12 auf, auf dem das Getriebe 4 und der Generator 3 gelagert sind.

Die Antriebswelle 5 ist mit einem jeden ihrer Enden mittels eines Lagers 13 an dem zugeordneten Querträger 11 gelagert.

Der Rahmen 7 ist, wie aus Figur 1 ersichtlich, auf ein längliches Gerinne 15 gesetzt, und die Antriebswelle 6 befindet sich im Bereich der Oberseite des in dem Gerinne 15 ausgebildeten Strömungskanals 17.

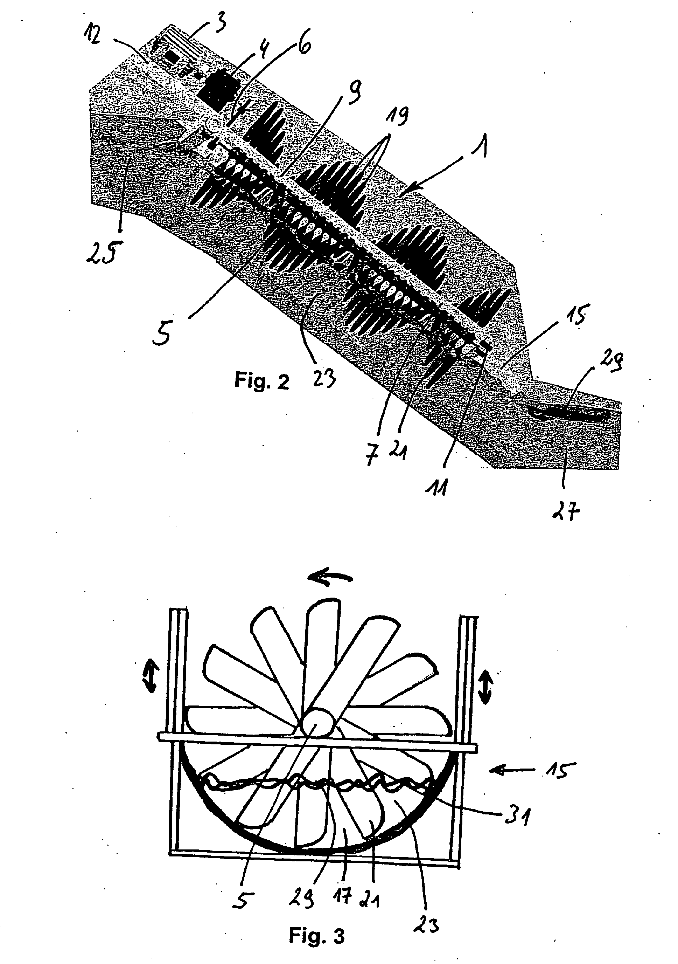

Wie aus Figur 1 weiterhin ersichtlich, sind entlang der Antriebswelle 5 eine Vielzahl von Repellern 19 in gleicher Form wie Propeller angeordnet. Die Repeller 19 weisen jeweils zwei um 180° versetzt angeordnete Schaufeln 21 auf, die von dem durchströmenden Wasser (siehe Fig. 2) in Drehung versetzt werden. Wie bereits erwähnt, können die Repeller 19 auch nur eine Schaufel oder mehr als zwei Schaufeln 21 aufweisen.

Die Schaufeln 21 der Repeller 19 sind entlang der Antriebswelle 5 und zueinander versetzt angeordnet. Mit anderen Worten, die Schaufeln 21 eines Repellers 19 sind zu den Schaufeln 21 des benachbarten Repellers 19 um einen einstellbaren Winkel versetzt, um eine optimale Kraftübertragung des vorbeiströmenden Mediums zu erreichen.

In Figur 2 ist die erfindungsgemäße Vorrichtung 1 schematisch schräg mit dem Gerinne 15 dargestellt, wobei Wasser 23 von einem Einlauf 25, der sich oben befindet, durch das Gerinne nach unten zu einem Ablauf 27 strömt. Durch das Strömen des Wassers werden die Schaufeln 21 in Drehung versetzt und damit die gesamte Antriebswelle 5, die über den Zahnriemen 6 und das Getriebe 4 den Generator 3 antreiben.

In Figur 3 ist die erfindungsgemäße Vorrichtung 1 schematisch in Frontansicht dargestellt, wobei ersichtlich ist, dass sich der obere Wasserspiegel 29 des Wassers 23 unterhalb der Antriebswelle 5 befindet, sodass nur ein Teil der Schaufeln 21 in das Wasser 23 eintaucht.

Der Strömungskanal 17 wird von einem nach oben offenen kreisförmigen Rohr gebildet.

Weiterhin ist in Figur 3 schematisch dargestellt, dass die Antriebswelle 5 in ihrer Höhe nach oben bzw. unten versetzt werden kann, wobei die Position in Figur 3 die unterste Position darstellt.

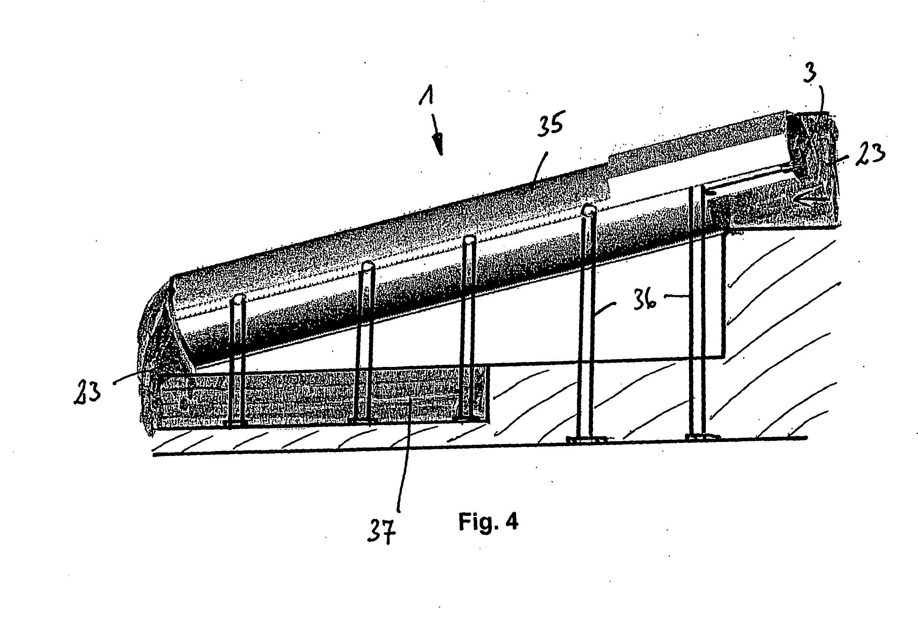

Figur 4 zeigt eine schematische Seitenansicht einer rohrförmig ausgebildeten erfindungsgemäßen Vorrichtung 1. Die Vorrichtung ist geneigt angeordnet und das Wasser 23 durchströmt ein Rohr 35, das kreisförmig ausgebildet ist und vorzugsweise aus Aluminiumblech gebildet ist. Innerhalb des Rohres 35 befindet sich die Antriebswelle mit den Schaufeln (nicht dargestellt).

Wie aus Figur 4 ersichtlich, füllt das einströmende Wasser 23 den Eingangsrohrquerschnitt vollständig aus. Der Generator 3 kann in dieser Ausführungsform vom Wasser umströmt werden. Alternativ kann die Antriebswelle kardanisch mit einem außerhalb angeordneten Generator (nicht dargestellt) angeordnet sein.

Das Rohr ist auf Stützen 36 gelagert, die entlang des Rohres in im Wesentlichen gleichen Abständen angeordnet sind. Unterhalb des Auslasses des Rohres 35 befindet sich ein Auslassbecken 37.

Gemäß dargestelltem Ausführungsbeispiel nach Figur 4 wird der Rohreingangsquerschnitt vollständig von Wasser durchströmt. Die erfindungsgemäße Vorrichtung erzeugt jedoch auch Strom, wenn der Eingangsquerschnitt nicht vollständig mit Wasser durchsetzt ist und sich erst später oder auch gar nicht die vollständig Durchströmung des Rohrquerschnitts einstellt.

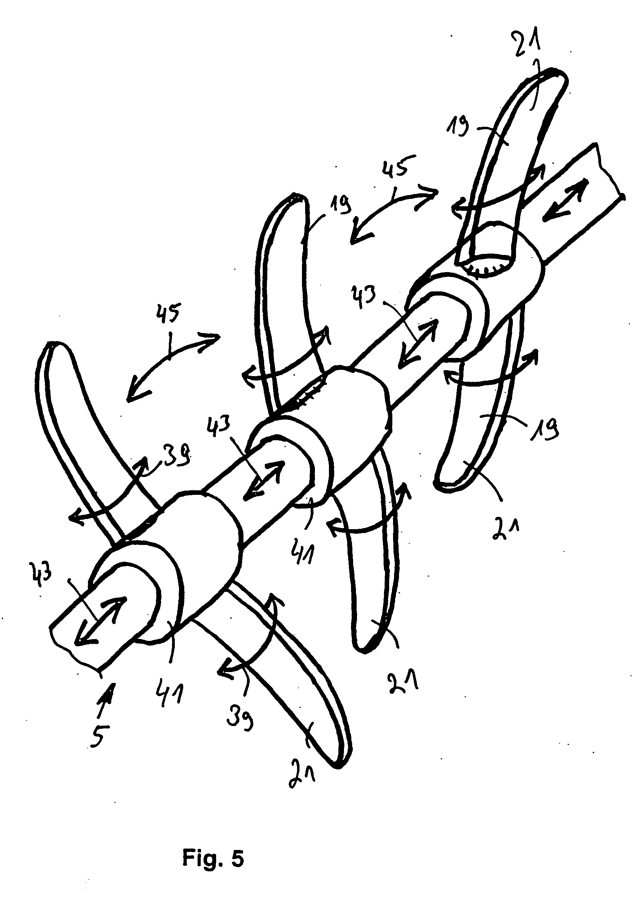

In Figur 5 sind schematisch die optimalen Einstellmöglichkeiten der Schaufeln 21 der Repeller 19 auf der Antriebswelle 5 dargestellt.

Vorteilhafterweise ist jede Schaufel 21 verdrehbar gemäß Doppelpfeil 39 in einem Lagerelement 41 gelagert, sodass die jeweilige Schaufelfläche 22 einer jeden Schaufel gegenüber der Strömung des vorbeiströmenden Wassers entsprechend individuell eingestellt werden kann.

Weiterhin können die Repeller 19 in ihrem Abstand zueinander entlang der Antriebswelle gemäß den Doppelpfeilen 43 im Abstand zueinander eingestellt werden. Die in Figur 5 dargestellten Möglichkeiten sind beispielhaft und die Anordnung der einzelnen Repeller 19 entspricht nicht deren tatsächlicher Einstellung, wobei durch die Doppelpfeile 45 deren Verdrehbarkeit zueinander angegeben ist, wie sie beispielsweise in den Figuren 1 und 2 dargestellt ist.

Mit dieser optimalen Verstellmöglichkeit wird erfindungsgemäß erreicht, dass die strömungsmechanischen Verhältnisse entlang der Antriebswelle optimal genutzt werden können, wobei zudem die Möglichkeit besteht, nicht nur, wie in Figur 5 dargestellt, identische Schaufeln 21 zu verwenden, sondern auch unterschiedliche Schaufeln mit unterschiedlichen Schaufelflächen anzuordnen, die zu einer Optimierung der erfindungsgemäßen Vorrichtung führen können.

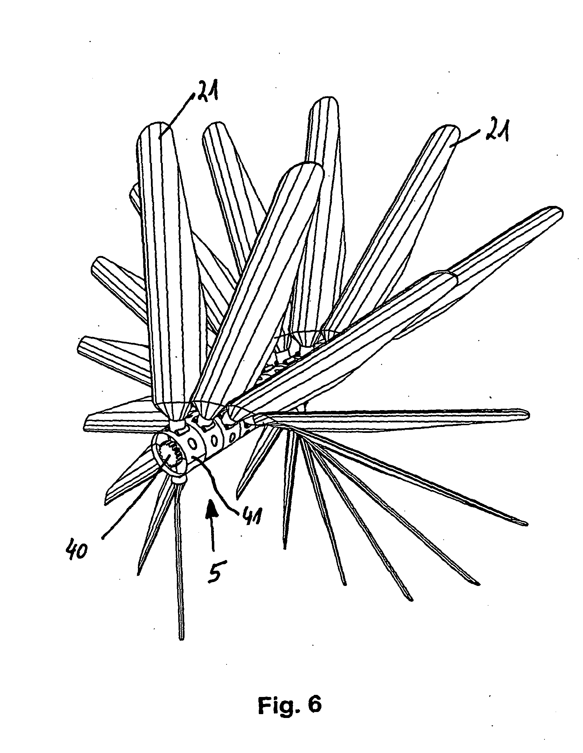

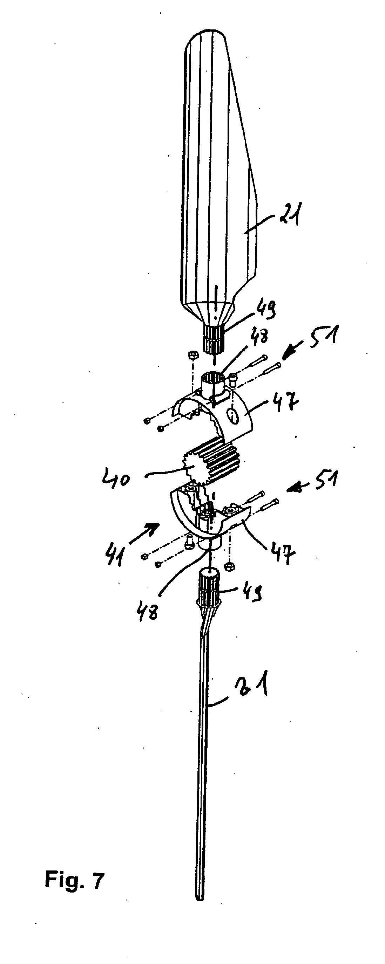

In Figur 6 ist in perspektivischer, schematischer Darstellung eine konstruktive Ausführungsform der Antriebswelle 5 dargestellt. Die Antriebswelle 5 weist eine Vielzahnwelle 40 auf, die längs verlaufende Zähne oder Rippen aufweist, wie das deutlicher aus Figur 7 ersichtlich wird, in der der Aufbau explosionsartig dargestellt ist. Das Lagerelement 41 ist geteilt ausgeführt und weist zwei Lagerschalen 47 auf. Die Lagerschalen 47 weisen eine gezahnte Innenkontur auf, die im Eingriff mit den Zähnen der Vielzahnwelle 40 zum formschlüssigen Umgreifen der Vielzahnwelle 40 dient.

In eine jede Lagerschale 47 ist eine Aufnahmebuchse 48 eingesetzt, wobei die Achsen der Buchsen 48 miteinander fluchten, sodass die Schaufeln 21 um exakt 180 Grad versetzt angeordnet sind. Innen weisen die Aufnahmebuchsen 48 ein Vielzahnprofil auf, das in formschlüssigen Eingriff mit einem Vielzahnprofil eines Lagerzapfens 49 einer jeden Schaufel 21 kommt. Durch den Vielzahnformschluss können sowohl die Schaufeln 21 entsprechend verdreht in die gewünschte Position gebracht werden und kann durch Versetzen der Lagerschalen 47 um die Vielzahnwelle 40 die Versetzung eines Paares von Schaufeln 21 zu dem benachbarten Paar bzw. den benachbarten Paaren auf einfachste Weise eingestellt bzw. bewerkstelligt werden. Herkömmliche Befestigungsmittel 51, gebildet aus Schrauben und Muttern dienen zur Befestigung der Lagerschalen 47 aneinander bzw. der Aufnahmebuchsen 48 an den Lagerschalen.

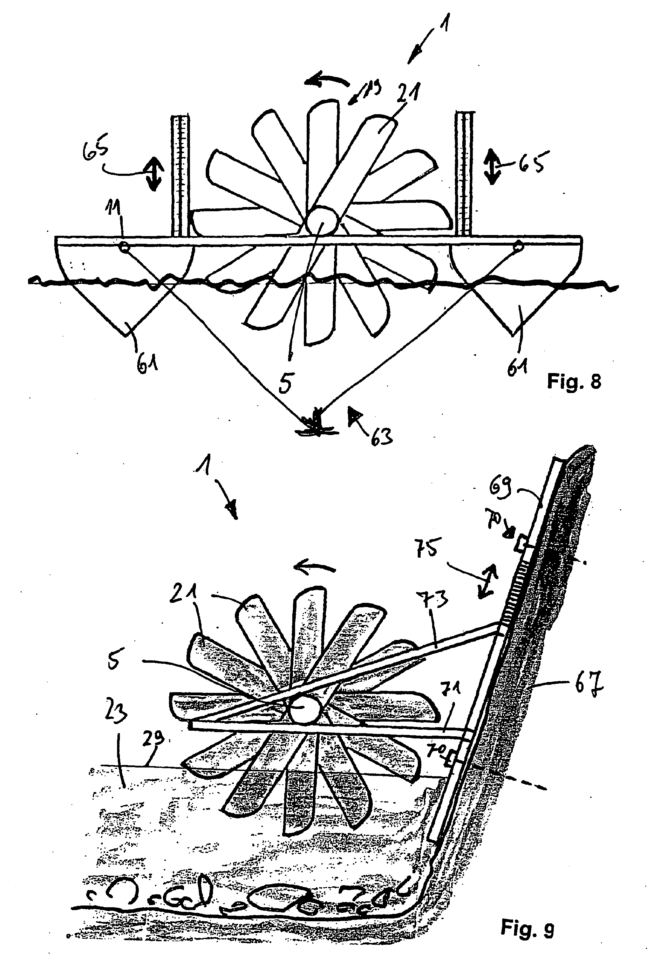

In Figur 8 ist eine weitere Ausführungsform der erfindungsgemäßen Vorrichtung zur Erzeugung von regenerativer und erneuerbarer Energie aus Wasser in Frontansicht gezeigt.

Im Unterschied zur Ausführungsform gemäß den Figuren 1 und 2 ist die erfindungsgemäße Vorrichtung 1 nicht auf einem Gerinne, sondern auf Pontonkörpern bzw. Schwimmkörpern 61 angebracht, die auf der Wasseroberfläche schwimmen. Der Schwimmkörper 61 weist vorteilhafterweise eine Verankerung 63 auf, die beispielsweise in Form von verankerten Seilen ausgebildet ist, die dem Schwimmkörper 61 die Freiheit geben, sich in Strömungsrichtung des vorbeiströmenden Wassers auszurichten.

Wie aus Figur 8 ersichtlich, besteht vorteilhafterweise auch die Möglichkeit, die Antriebswelle 5 zusammen mit ihren Schaufeln 21 in der Höhe gemäß Pfeilen 65 einzustellen.

Die Figur 9 zeigt eine weitere vorteilhafte Ausführungsform der vorliegenden erfindungsgemäßen Vorrichtung 1. Diese kann beispielsweise an einer Uferböschung 67 an entsprechenden Halteschienen 69 mittels entsprechenden Haltestreben 71 und 73 befestigt sein. Die Halteschienen 69 sind durch geeignete Befestigungsmittel 70 an der Uferböschung 67 befestigt.

Wie aus Figur 9 weiterhin ersichtlich, sind die Schaufeln 21 nur zu einem gewissen Bereich in das Wasser 23 eingetaucht. Ändert sich die Höhe des Wasserspiegel 29, so kann die erfindungsgemäße Vorrichtung 1 gemäß Doppelpfeil 75 nach oben angehoben bzw. nach unten abgesenkt werden, wodurch ein optimale Wirkungsweise der erfindungsgemäßen Vorrichtung erreicht wird.

Alternativ kann die erfindungsgemäße Vorrichtung auch schwenkbar an entsprechenden Schwenkarmen (nicht dargestellt) angebracht sein, die Ihrerseits seitlich an der Uferböschung schwenkbar gelagert sind. Dadurch kann auf einfachste Weise sowohl die Eintauchtiefe der Schaufeln 21 in das Wasser 23 eingestellt werden, als auch umgekehrt bei als konstant gewünschter Eintauchtiefe die gesamte Vorrichtung auf dem vorhandenen und sich gegebenenfalls verändernden Wasserspiegel 29 nachgeführt werden.

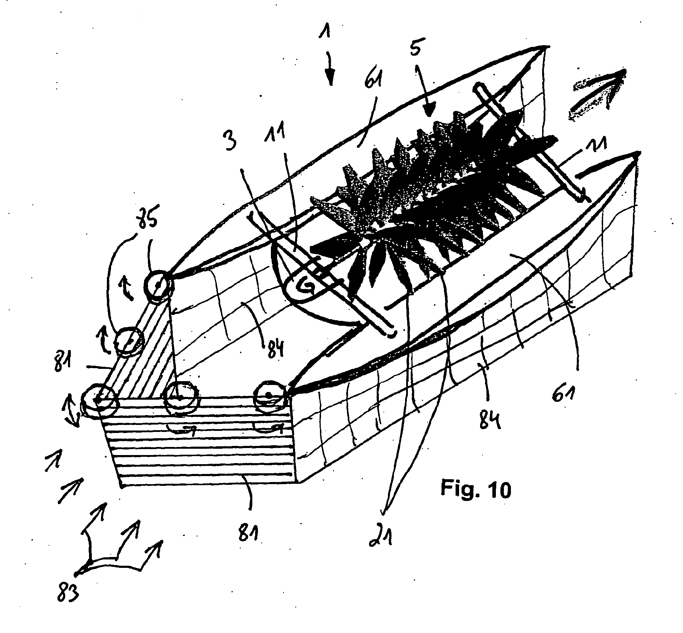

In Figur 10 ist eine ähnliche Ausführungsform zu jener von Figur 8 dargestellt. Vor den Schwimmkörpern 61 ist ein Grobrechen 81 angeordnet, der vorzugsweise Spitzpflugform aufweist. Die in Strömungsrichtung (Pfeile 83) ankommenden Fremdkörper werden durch den Grobrechen seitlich abgeführt und gelangen nicht in den Raum zwischen den beiden Schwimmkörpern 61. Zum weiteren Schutz, insbesondere auch für Fische, sind Netze 84 unterhalb des Schwimmkörpers 61 und gegebenenfalls auch am Heck (nicht dargestellt) vorgesehen.

Zur Ableitung von schwimmenden Treibgut sind weiterhin oben schwimmende bzw. sich im Bereich der Wasseroberfläche und darunter befindliche, runde Abweiser 85 vorgesehen, die sich vorzugsweise in Strömungsrichtung drehen können und ankommendes Treibgut an der Wasseroberfläche seitlich an der erfindungsgemäßen Vorrichtung 1 vorbeileiten können.

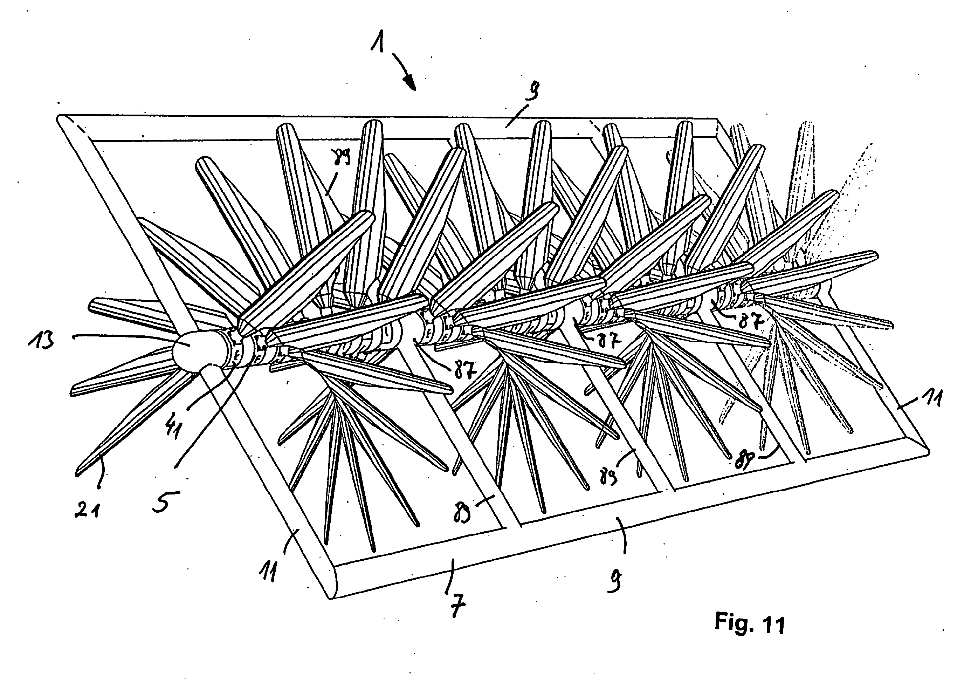

In Figur 11 ist eine weitere Ausführungsform der erfindungsgemäßen Vorrichtung 1 dargestellt. Sie ist ähnlich zu jener von Figur 1 mit einem Rahmen 7, wobei ersichtlich ist, dass zwischen den einzelnen Paaren der Schaufeln 21 entsprechende Abstände vorgesehen sind. Diese sind hier als im Wesentlichen konstant dargestellt, können jedoch auch unterschiedliche Größen aufweisen.

Weiterhin ist zur vibrationsarmen oder vibrationsfreien Lagerung der Antriebswelle 5 vorgesehen, diese an weiteren Stellen zu lagern. Entsprechende Lager 87 sind mit Querstreben 89 mit dem Rahmen 7 bzw. den Längsträgern 9 verbunden.

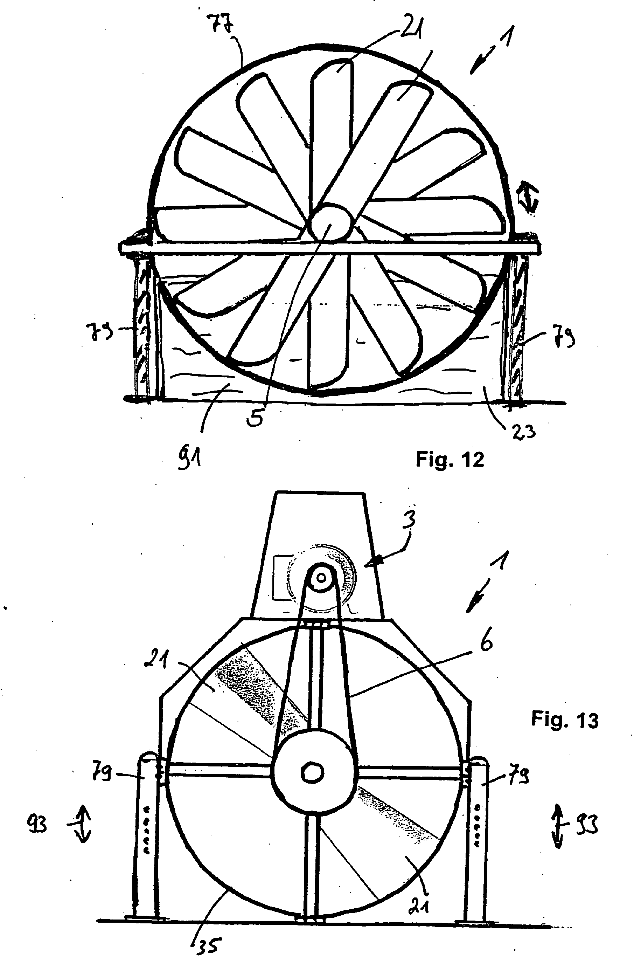

Figur 12 zeigt eine weitere Ausführungsform der erfindungsgemäßen Vorrichtung 1 in einem Rohr 77 ähnlich zu jenem in Figur 4, wobei Stützen 79 zur Halterung der gesamten Vorrichtung dienen. Das Rohr 77 kann beispielsweise horizontal angeordnet sein und unterhalb und seitlich des Rohres 77 strömt Wasser 23 vorbei und bildet einen Durchgang für Fische.

Wird das Rohr 77 in Schrägstellung angeordnet, so kann der Raum 91 unterhalb des Rohres 77 als Fischtreppe ausgebildet werden.

Figur 13 zeigt eine weitere erfindungsgemäße Ausgestaltung der erfindungsgemäßen Vorrichtung 1, ähnlich wie jene zu Figur 4, bei der jedoch der Generator 3 oberhalb des Rohres 35 angeordnet ist und die Stützen 79 gemäß Pfeilen 93 in ihrer Höhe verstellbar ausgebildet sind.

Als Riemen können Flachriemen, Keilriemen oder auch Zahnriemen Verwendung finden.

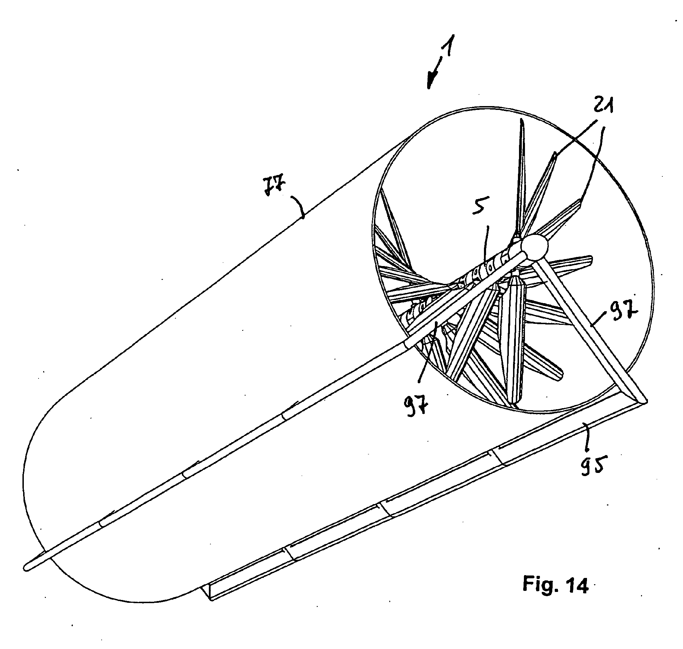

In Figur 14 ist in perspektivischer Ansicht eine rohrförmige Ausführungsform der erfindungsgemäßen Vorrichtung ähnlich wie jene von Figur 12 dargestellt. Ein Lagerrahmen 95 lagert sowohl die Antriebswelle 5 als auch das Rohr 77, wobei die beiden Lagerschenkel 97 beispielsweise einen Winkel von im Wesentlichen 90 Grad einschließen können.

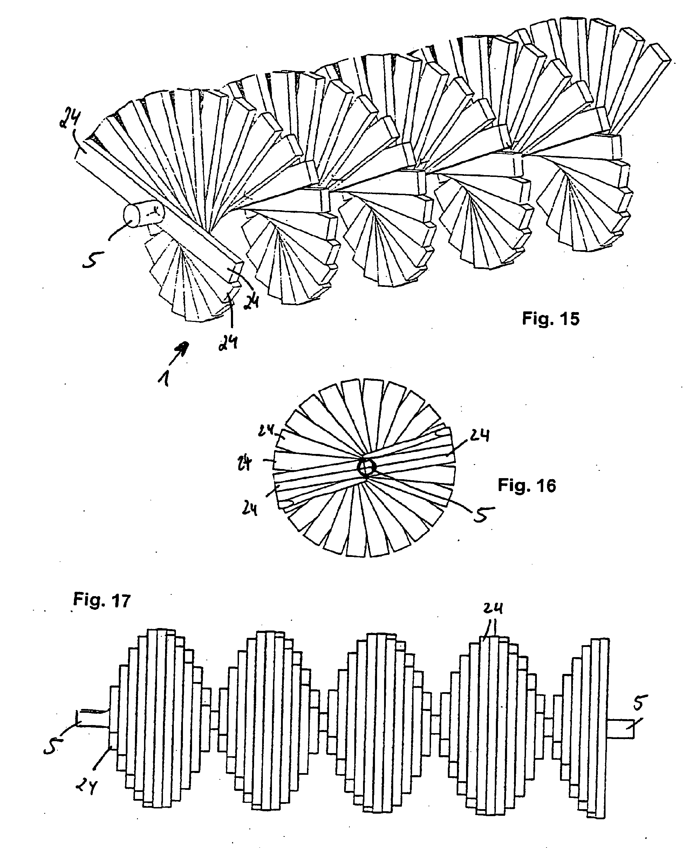

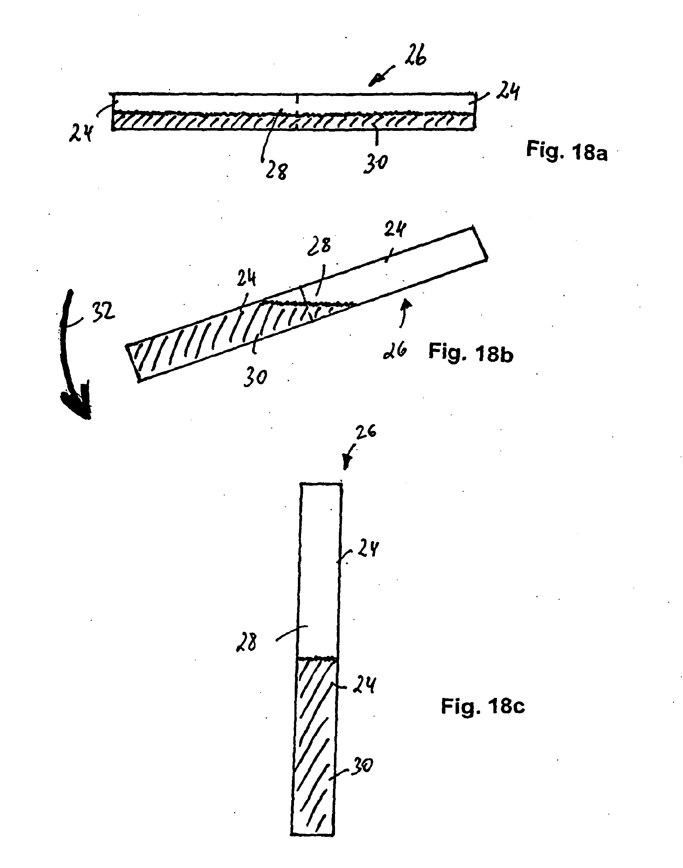

In den Figuren 15 bis 17 ist eine alternative Ausführungsform der erfindungsgemäßen Vorrichtung dargestellt. Dabei zeigt Figur 15 eine perspektivische Ansicht, Figur 16 eine Frontansicht und Figur 17 eine Seitenansicht. Die Figuren 18a bis 18c zeigen in vergrößertem Maßstab jeweils zwei Schaufeln 24 eines Repellers, die also um 180° zueinander versetzt angeordnet sind, welche zusammen ein Hohlprofil 26 bilden in dem ein länglicher Hohlraum 28 ausgebildet ist. Der längliche Hohlraum 28 ist nach außen abgedichtet und weist eine Flüssigkeit 30, bevorzugt Wasser auf. Die Flüssigkeit 30 füllt den Hohlraum 28 nicht vollständig aus, sondern im Wesentlichen zur Hälfte. Wenn die; das Hohlprofil 26 bildenden Schaufeln 24 eines Paares sich aus der waagerechten Position gemäß Fig. 18a, in der die Flüssigkeit 30 im Wesentlichen gleichmäßig verteilt im Hohlraum 28 angeordnet ist, nach einer Seite gemäß Pfeil 32 dreht, bewegt sich die Flüssigkeit 30 aufgrund der Schwerkraft schlagartig in den sich absenkenden Teilhohlraum (siehe Fig. 18b), wodurch schlagartig ein Drehmoment auf die entsprechende Schaufel 24 ausgeübt wird. In Fig. 18c ist der gefüllte Hohlraum 28 in seiner tiefsten Stelle dargestellt und dreht sich weiter wieder bis er die Stellung gemäß Fig. 18a erreicht und so fort.

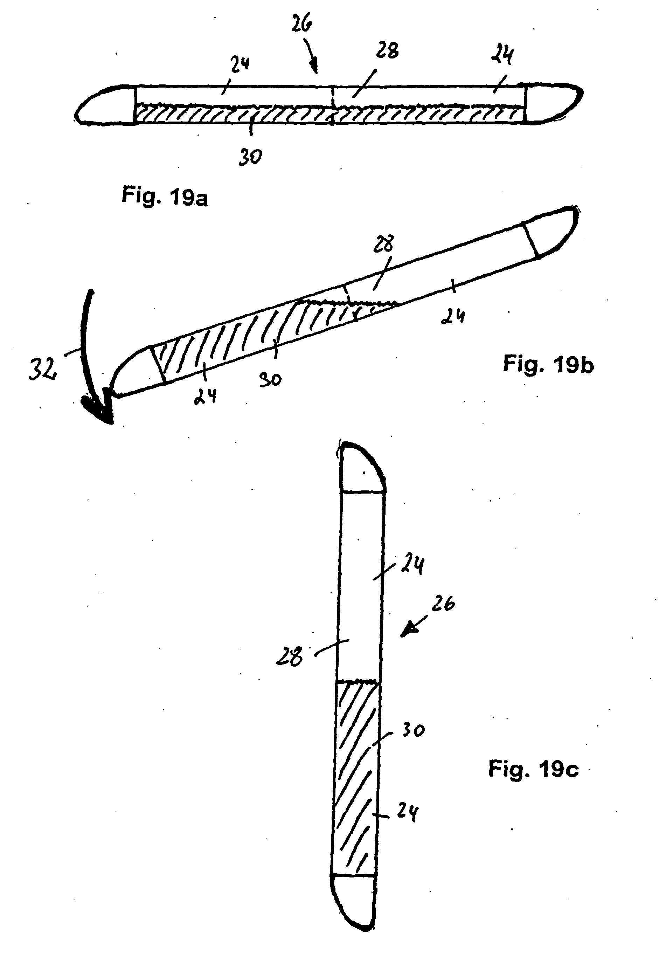

In den Figuren 19a bis 19c ist eine Variante zur Ausführungsform gemäß Figuren 15 bis 18c dargestellt. An den seitlichen bzw. äußeren Stirnenden der Schaufeln 24 sind schaufelartige Spitzen 34 vorgesehen, die eine verbesserte Anströmfläche insbesondere bei wenig Fließwasser aufweisen.

Wie aus der spiralförmigen Anordnung gemäß Figur 15 leicht ersichtlich, setzt sich diese schlagartige Bewegung stets fort und wird dadurch, die Antriebswelle 5 in Drehung versetzt. Aufgrund der Eigendynamik dieser Vorrichtung ist ersichtlich, dass nur wenig Energie von außen der Vorrichtung zugeführt werden muss, um die Antriebswelle 5 in Drehung zu versetzen. Deshalb eignet sich diese Ausführungsvariante insbesondere für Einsätze bei wenig fließendem Wasser.

Mit der erfindungsgemäßen Vorrichtung zur Erzeugung von regenerativer und erneuerbarer Energie aus Wasser wird eine Vielzahl von Vorteilen erreicht, die unter anderem sind:
- einfache und leichte Einsetzbarkeit in fließenden Gewässern, ohne anfallenden Baumaßnahmen und damit besonders schnelle Verfügbarkeit;
- ermöglichen einer regionalen Grundversorgung durch entsprechenden ortsnahen Einsatz beim Stromverbraucher;
- modular-aufbaubare Gesamtanlage aus mehreren Einzelvorrichtungen zur optimalen Ausbeute des vorbeiströmenden Wassers je nach Vorort herrschenden Bedingungen;
- universelle und gegebenenfalls automatische Anpassung der Vorrichtung an die vorhandenen Strömungsbedingungen und damit Sicherstellung eines optimalen Wirkungsgrades der erfindungsgemäßen Vorrichtung;
- umweltfreundliche Energieerzeugung;
- optimale Größenanpassung der Vorrichtung an die entsprechende zu erzeugende Energiemenge, beispielsweise Montagesatz in Koffergröße für den Einsatz auf Almen und dergleichen;
- Anpassungsmöglichkeit an jegliche Art von fließenden Gewässern und unterschiedlichen Strömungsbedingungen;
- absolut emissionsfreie Energieerzeugung;
- je nach Ausführungsform besonders geräuscharm weil gekapselt.

Bisher wurde beschrieben, dass die erfindungsgemäße Vorrichtung im Wesentlichen stationär zur Erzeugung von Energie geeignet ist. Eine weitere Verwendungsart kann jedoch auch für den Antrieb von Schiffskörpern sein. So kann stationär Energie erzeugt werden und in entsprechenden Akkumulatoren gespeichert werden. Soll der Schiffskörper bewegt werden, dient die gespeicherte Energie zum Antrieb von entsprechenden Schiffsantriebsvorrichtungen. Zum Wiederaufladen der Akkus wird der Schiffskörper dann wieder entsprechend in die Strömungsrichtung des Wassers gestellt.

Alternativ können Energieerzeugungsvorrichtung und Schiffsantrieb gleichzeitig betrieben werden, sodass die erzeugte Energie unmittelbar für den Antrieb des Schiffes Verwendung findet.

## Patentansprüche

1. Vorrichtung (1) zur Erzeugung von regenerativer und erneuerbarer Energie aus Wasser, mit einer Antriebswelle (5), die eine Mehrzahl von Schaufeln (21, 24) aufweist, die sich zumindest teilweise in vorbeiströmendes Wasser (23) erstrecken und durch dieses Wasser (23) in Drehung versetzbar sind, wobei die Schaufeln (21, 24) entlang der Antriebswelle (5) und zueinander versetzt angeordnet sind sowie repellerartig ausgebildet sind,
**dadurch gekennzeichnet, dass**
- wenigstens ein Generator (3) zur Erzeugung elektrischer Energie vorgesehen ist, der mit der Antriebswelle (5) verbunden ist, und dass
- die Winkelstellung der Schaufeln (21, 24) untereinander einstellbar ist.

2. Vorrichtung nach Anspruch 1, **dadurch gekennzeichnet, dass** der Abstand der Schaufeln (21, 24) in Längsrichtung der Antriebswelle (5) einstellbar ist.

3. Vorrichtung nach einem der Ansprüche 1 oder 2, **dadurch gekennzeichnet, dass** die Winkelstellung der Schaufelfläche (22) bezüglich der Antriebswelle (5) einstellbar ist.

4. Vorrichtung nach einem der Ansprüche 1 bis 3, **dadurch gekennzeichnet, dass** die Einstellung der Schaufeln (21, 24) mittels Computersteuerung erfolgt, wobei die Einstellung mechanisch, elektromotorisch, pneumatisch oder hydraulisch erfolgen kann.

5. Vorrichtung nach einem der Ansprüche 1 bis 4, **dadurch gekennzeichnet, dass** die Schaufeln (21, 24) auf der Antriebswelle (5) lösbar montiert sind.

6. Vorrichtung nach einem der Ansprüche 1 bis 5, **dadurch gekennzeichnet, dass** die Antriebswelle (5) unmittelbar mit dem Generator (3) verbunde ist.

7. Vorrichtung nach einem der Ansprüche 1 bis 6, **dadurch gekennzeichnet, dass** die Antriebswelle (5) in einem Rahmen (7) gelagert ist.

8. Vorrichtung nach Anspruch 7, **dadurch gekennzeichnet, dass** der Rahmen in einem halboffenen oder geschlossenen Gerinne (15) bzw. in einem Rohr (35, 77) angeordnet ist.

9. Vorrichtung nach einem der Ansprüche 1 bis 8, **dadurch gekennzeichnet, dass** sie horizontal, schräg oder vertikal angeordnet ist.

10. Vorrichtung nach einem der Ansprüche 1 bis 9, **dadurch gekennzeichnet, dass** sie vorzugsweise mittig zwischen zwei Auftriebs- oder Schwimmkörpern (61) angeordnet ist, die vorzugsweise eine Verankerung (63) aufweisen.

11. Vorrichtung nach Anspruch 10, **dadurch gekennzeichnet, dass** sie ein selbstausrichtendes Ruderwerk aufweist.

12. Vorrichtung nach einem der Ansprüche 1 bis 11, **dadurch gekennzeichnet, dass** sie Leit- oder Strahlrohre umfasst, die den Wasserfluss auf die äußeren Enden der Schaufeln (21, 24) leiten.

13. Vorrichtung nach einem der Ansprüche 1 bis 12, **dadurch gekennzeichnet, dass** die die Schaufeln (21, 24) lagernde Antriebswelle (5) höhenverstellbar gelagert ist.

14. Vorrichtung nach Anspruch 13, **dadurch gekennzeichnet, dass** die Antriebswelle (5) schwenkbar gelagert ist.

15. Vorrichtung nach einem der Ansprüche 1 bis 14, **dadurch gekennzeichnet, dass** die Antriebswelle (5) sowohl an ihren beiden Enden als auch an wenigstens einer weiteren Stelle (87) zwischen den Enden gelagert ist.

16. Vorrichtung nach Anspruch 15, **dadurch gekennzeichnet, dass** zur Lagerung der Antriebswelle (5) wartungsfreie, ölfreie Gleit- oder Kugellager auch aus Kunststoff oder Keramik vorgesehen sind.

17. Vorrichtung nach einem der Ansprüche 1 bis 16, **dadurch gekennzeichnet, dass** die Antriebswelle (5) als eine Vielzahnwelle (40) und die Halterung der jewieligen Schaufel (21, 24) als Vielzahnhalterung (48) ausgebildet ist.

18. Vorrichtung nach einem der Ansprüche 1 bis 17, **dadurch gekennzeichnet, dass** an deren Frontseite ein Grobrechen (81), vorzugsweise in Spitzpflugform und vorzugsweise mit oben schwimmenden bzw. im Bereich der Wasseroberfläche und darunter befindlichen runden Abweisern (85) vorgesehen ist.

19. Vorrichtung nach einem der Ansprüche 1 bis 18, **dadurch gekennzeichnet, dass** weiterhin ein Gitterkäfig vorgesehen ist, der die Vorrichtung umgibt.

20. Vorrichtung nach einem der vorhergehenden Ansprüche, **dadurch gekennzeichnet, dass** je zwei um 180° versetzte Schaufeln (24) ein gemeinsames Hohlprofil (26) bilden, das einen Hohlraum (28) aufweist, in dem eine Flüssigkeit (30) vorhanden ist.

21. Vorrichtung nach Anspruch 20, **dadurch gekennzeichnet, dass** die in dem Hohlraum (28) vorhandene Flüssigkeit Wasser ist.

22. Vorrichtung nach Anspruch 20 oder 21, **dadurch gekennzeichnet, dass** die Flüssigkeit (39) den Hohlraum (28) im wesentlichen zur Hälfte ausfüllt.

23. Anlage zur Erzeugung von regenerativer und erneuerbarer Energie aus Wasser, **dadurch gekennzeichnet, dass** sie eine Mehrzahl von hintereinander und/oder nebeneinander und/oder übereinander angeordneter Vorrichtungen (1) nach einem der Patentansprüche 1 bis 22 aufweist.

24. Anlage nach Anspruch 23, **dadurch gekennzeichnet, dass** die Antriebswellen (5) der Vorrichtungen (1) miteinander kardanisch verbunden sind.

## Claims

1. Device (1) for producing regenerative and renewable energy from water, comprising a drive shaft (5) having a plurality of blades (21, 24) which extend at least partially into water (23) flowing past and which can be set in rotation by this water (23), the blades (21, 24) being arranged along the drive shaft (5) and offset relative to one another and being configured repeller-like,
**characterised in that**
- at least one generator (3) for producing electrical energy and connected to the drive shaft (5) is provided, and **in that**
- the angular position of the blades (21, 24) is adjustable relative to one another.

2. Device according to Claim 1, **characterised in that** the spacing of the blades (21, 24) is adjustable in the longitudinal direction of the drive shaft (5).

3. Device according to one of Claims 1 and 2, **characterised in that** the angular position of the blade face (22) is adjustable relative to the drive shaft (5).

4. Device according to one of Claims 1 to 3, **characterised in that** the adjustment of the blades (21, 24) is computer-controlled, the adjustment being effectible by mechanical, electromotor, pneumatic or hydraulic means.

5. Device according to one of Claims 1 to 4, **characterised in that** the blades (21, 24) are releasably fitted to the drive shaft (5).

6. Device according to one of Claims 1 to 5, **characterised in that** the drive shaft (5) is directly connected to the generator (3).

7. Device according to one of Claims 1 to 6, **characterised in that** the drive shaft (5) is mounted in a frame (7).

8. Device according to Claim 7, **characterised in that** the frame is arranged in a semi-open or closed trough (15) or in a duct (35, 77).

9. Device according to one of Claims 1 to 8, **characterised in that** it is arranged horizontal, inclined or vertical.

10. Device according to one of Claims 1 to 9, **characterised in that** it is preferably arranged in the middle between two buoyancy objects or floats (61) preferably featuring a mooring (63).

11. Device according to Claim 10, **characterised in that** it comprises a self-orienting rudder assembly.

12. Device according to one of Claims 1 to 11, **characterised in that** it includes directing or jetting pipes which direct the water flow to the outer ends of the blades (21, 24).

13. Device according to one of Claims 1 to 12, **characterised in that** the drive shaft (5) supporting the blades (21, 24) is mounted height-adjustable.

14. Device according to Claim 13, **characterised in that** the drive shaft (5) is pivotally mounted.

15. Device according to one of Claims 1 to 14, **characterised in that** the drive shaft (5) runs in bearings at both ends as well as at at least one further location (87) between the ends.

16. Device according to Claim 15, **characterised in that** maintenance-free, oil-free plain or ball bearings also made of plastics or ceramics are provided as the drive shaft (5) bearings.

17. Device according to one of Claims 1 to 16, **characterised in that** the drive shaft (5) is configured as a splined shaft (40) and the mount of the respective blade (21, 24) as a splined mount (48).

18. Device according to one of Claims 1 to 17, **characterised in that** at its front side there is provided a coarse screen (81), preferably of pointed-plough shape, and preferably featuring round deflectors (85) floating at the top or located in the region of the water surface and therebelow.

19. Device according to one of Claims 1 to 18, **characterised in that** a mesh cage surrounding the device is further provided.

20. Device according to one of the preceding claims, **characterised in that** each two blades (24) offset by 180° form a common hollow profile (26) comprising a cavity (28) in which a fluid (30) is present.

21. Device according to Claim 20, **characterised in that** the fluid present in the cavity (28) is water.

22. Device according to Claim 20 or 21, **characterised in that** the fluid (30) fills substantially half of the cavity (28).

23. System for producing regenerative and renewable energy from water, **characterised in that** it comprises a plurality of devices (1) according to one of Claims 1 to 22 arranged one behind the other and/or alongside each other and/or above each other.

24. System according to Claim 23, **characterised in that** the drive shafts (5) of the devices (1) are interconnected cardanically.

## Revendications

1. Dispositif (1) de production d'énergie régénérative et renouvelable à partir de l'eau, avec un arbre de transmission (5) possédant une pluralité de pales (21, 24) qui s'étendent au moins partiellement dans une eau qui s'écoule (23) et qui peuvent être mises en rotation par cette eau (23), les pales (21, 24) étant disposées le long de l'arbre de transmission (5) en étant décalées entre elles, à la manière d'une hélice,
**caractérisé en ce que**
- il est prévu au moins un générateur (3) destiné à produire de l'énergie électrique et relié à l'arbre de transmission (5) ; et
- il est possible de régler la position angulaire des pales (21, 24) entre elles.

2. Dispositif selon la revendication 1, **caractérisé en ce que** la distance entre les pales (21, 24) peut être réglée dans la direction longitudinale de l'arbre de transmission (5).

3. Dispositif selon l'une des revendications 1 et 2, **caractérisé en ce que** la position angulaire de la surface des pales (22) peut être réglée par rapport à l'arbre de transmission (5).

4. Dispositif selon l'une des revendications 1 à 3, **caractérisé en ce que** le réglage des pales (21, 24) est assuré par une commande informatique, le réglage pouvant se faire mécaniquement, par moteur électrique, pneumatiquement ou hydrauliquement.

5. Dispositif selon l'une des revendications 1 à 4, **caractérisé en ce que** les pales (21, 24) sont montées de manière amovible sur l'arbre de transmission (5).

6. Dispositif selon l'une des revendications 1 à 5, **caractérisé en ce que** l'arbre de transmission (5) est relié directement au générateur (3).

7. Dispositif selon l'une des revendications 1 à 6, **caractérisé en ce que** l'arbre de transmission (5) est supporté dans un cadre (7).

8. Dispositif selon la revendication 7, **caractérisé en ce que** le cadre est disposé dans une goulotte (15) semi-ouverte ou fermée ou dans un tube (35, 77).

9. Dispositif selon l'une des revendications 1 à 8, **caractérisé en ce qu'**il est disposé horizontalement, verticalement ou en biais.

10. Dispositif selon l'une des revendications 1 à 9, **caractérisé en ce qu'**il est disposé de préférence entre deux flotteurs ou corps flottants (61) qui possèdent de préférence un ancrage (63).

11. Dispositif selon la revendication 10, **caractérisé en ce qu'**il possède un mécanisme de gouvernail à alignement automatique.

12. Dispositif selon l'une des revendications 1 à 11, **caractérisé en ce qu'**il comprend des tubes de guidage ou de projection qui dirigent le flux d'eau vers les extrémités extérieures des pales (21, 24).

13. Dispositif selon l'une des revendications 1 à 12, **caractérisé en ce que** l'arbre de transmission (5) supportant les pales (21, 24) est monté de façon réglable en hauteur.

14. Dispositif selon la revendication 13, **caractérisé en ce que** l'arbre de transmission (5) est monté de façon pivotante.

15. Dispositif selon l'une des revendications 1 à 14, **caractérisé en ce que** l'arbre de transmission (5) est supporté à la fois par ses deux extrémités et parau moins un autre point (87) entre les extrémités.

16. Dispositif selon la revendication 15, **caractérisé en ce qu'**il est prévu pour supporter l'arbre de transmission (5) des paliers lisses ou à billes sans huile et sans entretien, ou encore faits en matière plastique ou en céramique.

17. Dispositif selon l'une des revendications 1 à 16, **caractérisé en ce que** l'arbre de transmission (5) prend la forme d'un arbre à plusieurs dents (40) et la monture des différentes pales (21, 24) est une monture à plusieurs dents (48).

18. Dispositif selon l'une des revendications 1 à 17, **caractérisé en ce qu'**il est prévu sur son côté avant une grille de garde (81), de préférence en forme d'étrave et de préférence avec des défenses rondes (85) flottantes ou se situant au niveau de la surface de l'eau et au-dessous.

19. Dispositif selon l'une des revendications 1 à 18, **caractérisé en ce qu'**il est prévu en outre une cage faite de grilles qui entoure le dispositif.

20. Dispositif selon l'une des revendications précédentes, **caractérisé en ce que** deux pales (24) décalées de 180° forment ensemble un profil creux commun (26) qui possède un espace vide (28) dans lequel se trouve un liquide (30).

21. Dispositif selon la revendication 20, **caractérisé en ce que** le liquide se trouvant dans l'espace vide (28) est de l'eau.

22. Dispositif selon la revendication 20 ou 21, **caractérisé en ce que** le liquide (39) remplit l'espace creux (28) essentiellement à moitié.

23. Installation de production d'énergie régénérative et renouvelable à partir d'eau, **caractérisée en ce qu'**elle comprend une pluralité de dispositifs (1) selon l'une des revendications 1 à 22 qui sont disposés successivement et/ou juxtaposés et/ou superposés.

24. Installation selon la revendication 23, **caractérisée en ce que** les arbres de transmission (5) des dispositifs (1) sont reliés ensemble par des joints de Cardan.
